# EUROPEAN PATENT SPECIFICATION

(11) **EP 2 863 123 B1**
(45) Date of publication and mention of the grant of the patent: **21.08.2019**
(21) Application number: 14003568.4
(22) Date of filing: 20.10.2014
(51) Int. Cl.: F23G 7/06, F23G 5/16

(54) **Method of low-emission incineration of low and mean calorific value gases containing NH3, HCN, C5H5N, and other nitrogen-containing compounds in combustion chambers of industrial power equipment, and the system for practicing the method**
Verfahren zum Verbrennen von stickstoffhaltigen, niederkalorischen Gasen, wie z. B. NH3, HCN, C5H5N, in Brennkammern einer industriellen Energieerzeugungsanlage, und System zum Ausführen des Verfahrens
Procédé pour incinérer des gaz pauvres contenant des composants azotés, comme par exemple NH3, HCN, C5H5N, dans les chambres de combustion d'une installation énergétique industrielle, et système pour mettre en oeuvre le procédé

(30) Priority: 21.10.2013 PL 40571013
(43) Date of publication of application: 22.04.2015
(73) Proprietor: ICS Industrial Combustion Systems Sp. z o.o., 60-349 Poznan (PL)
(72) Inventor: Szewczyk, Dariusz, 62-030 Lubon (PL); Skotnicki, Pawel, 61-612 Poznan (PL); Jankowski, Radoslaw, 60-241 Poznan (PL); Pasiewicz, Andrzej, 62-035 Kórnik (PL)
(74) Representative: Passowicz, Marek

(56) References cited:
- EP-A2- 0 773 406
- WO-A2-2012/002829
- WO-A2-2012/002830
- US-A- 5 269 235

## Description

The invention relates to a method of a low-emission incineration of low and medium calorific value gaseous containing NH₃, HCN, C₅H₅N and other nitrogen-containing compounds in the combustion chambers of industrial power equipment, such as the power and heating boilers, and the metallurgical furnaces, characterized by low NOₓ emissions. Additionally, the subject of the invention includes a system for use this method.

Patent No. P.391715 describes a method of incineration of low calorific value waste gases, which involves the gradual co-incineration of waste gas together with high calorific value gaseous fuel, where the high calorific value gas is supplied tangentially to the walls of the first combustion section and where it creates together with the axially supplied air, a mixture, which is ignited by one of the pilot burners; the flame heats the system interior, next after reaching the adequate temperature in the combustion section waste gas is fed onto the resulting flame which ignites and heats the first and subsequent sections of the system, upon reaching a specific temperature, the waste gas is also supplied into the second combustion section, which is located in the burner, tangentially to the walls of this section, after exceeding another temperature threshold the waste gas is supplied to the third combustion section, which is located directly in the combustion chamber at an angle of 0 to 90° with respect to the direction of the combustion chamber axis, the amount of air supplied to the system by the first and similarly by the subsequent second combustion section approximates the stoichiometric value (λ=1), this amount of air results in the generation of an adequately high temperature for waste gas treatment, in the fourth section of the combustion system located in the combustion chamber vortex-generating air is fed into the system in a quantity of up to 30% of the amount of air supplied to the system, throughout the operation time of the system co-incineration of high calorific value gas and waste gas takes place, the system cannot operate without the supply of high calorific value gas to the system and with a turned off pilot burner. US 5269235 discloses a process for disposing of a chemical waste stream by burning it in a three stage combustion process.

The technical issue to the solved is the low-emission method of incineration of low and mean calorific value gases containing considerable amounts of nitrogen compounds, such as NH₃, HCN, C₅H₅N, contributing to intensive production of nitrogen oxides, additionally containing particulate matter and liquid phase containing high hydrocarbons, with a minimum demand for high calorific value fuel as kindling fuel for heating the system to a temperature of 750°C and in special cases as fuel for stabilizing the process temperature.

A method according to the invention is provided in claim 1.

It is advantageous to introduce low or mean calorific value gas into the combustion system in the second combustion section via at least one nozzle located at an acute angle of 0 to 90° to the longitudinal axis of the combustion system depending on the physicochemical properties of the gas. Preferably when the low and mean calorific value gas stream and the stream of air with flue gases are parallel to each other, the direction and rate with which the gas and air with flue gases are supplied to the second combustion section causes the production of a strong internal recirculation of flue gases within the second combustion section.

A system according to the invention is provided in claim 3.

It is advantageous when each low or mean calorific value gas nozzle in the second combustion section of the combustion system is connected to the low or mean calorific value gas feeder via a shut-off valve.

Next, it is advantageous when every air nozzle in the third combustion section of the combustion system is connected to the air heater via a control damper.

In addition, it is advantageous when the system further comprises a temperature sensor at the exit of the combustion system, the control element is connected to said temperature sensor, to the shut-off valve of the low or mean calorific value gas nozzle, to the control dampers of the air nozzles supplying air to the third section of the combustion system.

Moreover, it is advantageous when the system has at least one branch where the first section of the combustion system is connected with the common second section of the combustion system and in series with the third combustion section of the combustion system.

The invention provides for the incineration of low or mean calorific value gases containing considerable amounts of nitrogen compounds, such as NH₃, HCN, C₅H₅N (which contribute to the intensive production of nitrogen oxides), during a safe and stable combustion process whilst maintaining high efficiency of the system and extremely low emissions of CO and NOx.

Furthermore, because of the application of different combustion technologies, the combustion system facilitates:
- incineration of waste gas fuel with a low and mean heating value,
- incineration of gas fuel containing considerable amounts of nitrogen compounds, such as NH₃, HCN, C₅H₅N,
- incineration of gas fuel containing particulate matter and a liquid phase,
- incineration of gas fuel containing high hydrocarbons, both in the liquid and gas phases,
- very low consumption of high calorific value fuel, which is used practically only for initial heating of the system.

In the method according to the invention, combustion takes place in accordance with the objectives of volumetric combustion technology, and flame stabilisation is based on the aerodynamic properties of the process conducted according to set velocities and directions for supplying air, high calorific value fuel and low or mean calorific value gases in particular combustion zones and on temperature stabilisation. Gradually supply of air to different combustion sections and the aerodynamic shaping and separation of individual combustion zones results in low CO and NO_{X} emissions. An essential part of the incineration process is carried out in a semi-adiabatic combustion chamber above the mixture's self-ignition point.

The example embodiment of the invention is explained with the aid of a drawing comprising the following figures:
- fig. 1: - schematic diagram of the system as the method's embodiment,

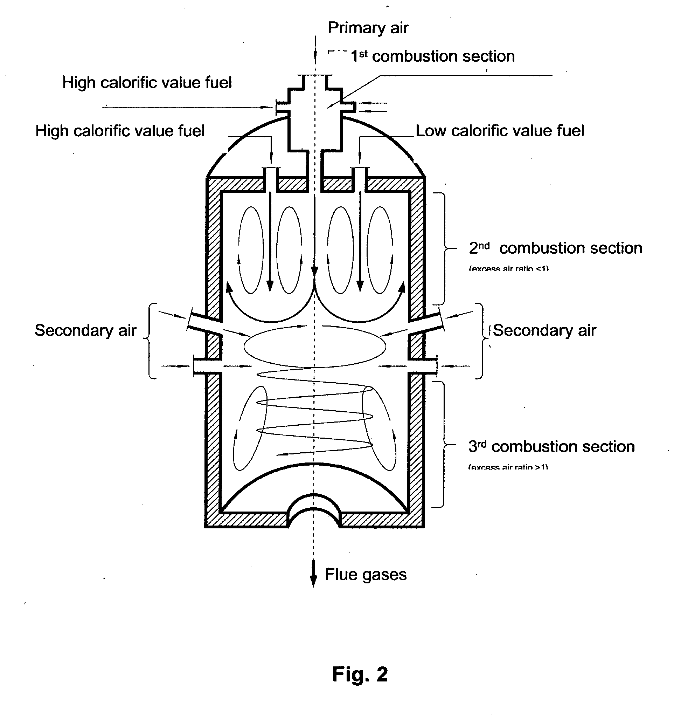

- fig. 2: - schematic diagram of the aerodynamic shaping of combustion zones,

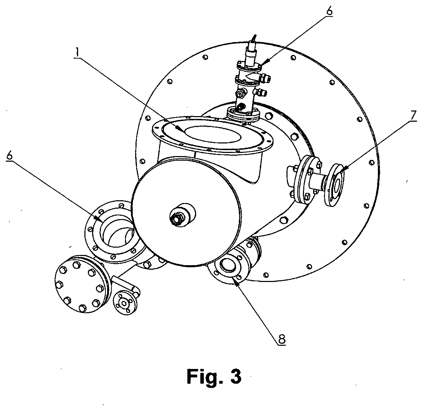

- fig. 3: - section of the combustion system in an isometric projection presenting the first combustion section with a pilot burner, high calorific value fuel lance and the lances for high calorific value fuel and low or mean calorific value gas lances supplying gas to the second combustion section.

The system comprises a supply air chamber 1, combustion system 2 with sections 3, 4, 5 connected in series, ignition burner 6, high calorific value fuel nozzles 7 and 8, low and mean calorific value gas nozzles 9, air nozzles 10, air heater 11, high calorific value fuel feeder 12, low and mean calorific value gas feeder 13, control dampers 14 and 19, high calorific value fuel shut-off valves 15, low and mean calorific value gas shut-off valves 20, temperature sensors 16 and 21 flame detector 17, is characterised in that the first section 3 of the combustion system 2 has a form of a cylindrical cylinder containing at least one pilot burner 6 and at least one high calorific value fuel nozzle 7 placed parallel to the tangent of the cylindrical cylinder's cross-section, where at one side the first section 3 of the combustion system 2 is connected to the supply air chamber 1, and at the other side it couples, through a narrowing, with the entrance of the second section 4 of the combustion system 2, one cylinder contains the second 4 and third section 5 of the combustion system 2, so that one part of the cylinder represents the second section 4 of the combustion system 2, housing at least one high calorific value gas nozzle 8, and at least one low or mean calorific value gas nozzle 9 and at least one temperature sensor 16 of the combustion system, while the second part of the cylinder representing the third section 5 of the combustion system 2 houses at least two air nozzles 10 mounted on several levels, preferably on two levels, where the nozzles on each level are inclined towards the flow in the combustion chamber, where the inclination ranges between 0° to 45° from the plane perpendicular to the longitudinal axis of the combustion chamber, and may differ for each level, additionally, nozzles on all levels are positioned in a way that produces a strong vortex within the combustion chamber with the rotation axis overlapping the axis of the combustion chamber.

The supply air chamber 1 is connected to the air heater 11 via a control damper 19.

In the first section 3 of the combustion system 2 each high calorific value fuel nozzle 7 is connected to a high calorific value fuel feeder 12 via a shut-off valve 15.

In the second section 4 of the combustion system 2, each high calorific value fuel nozzle 8 is connected to a high calorific value fuel feeder 12 via a shut-off valve 15.

In the second section 4 of the combustion system 2, each low or mean calorific value gas nozzle 9 is connected to a low or mean calorific value gas feeder 13 via a shut-off valve 20.

In the third section 5 of the combustion system 2, each air nozzle 10 is connected to an air heater 11 via a control damper 14.

The control element 18 is connected to temperature sensors 16 and 21 and shut-off valves 15 of high calorific value fuel nozzles 7, 8, shut-off valves 20, of low or mean calorific value gas nozzles 9, control dampers 14 of air nozzles 10 supplying air to the third combustion section 5 and control damper 19 of the pipe supplying air to the air chamber 1.

The system has at least one branch where the first section 3, is connected in series with a common second section 4 of the combustion system 2, and third section 5 of the combustion system 2.

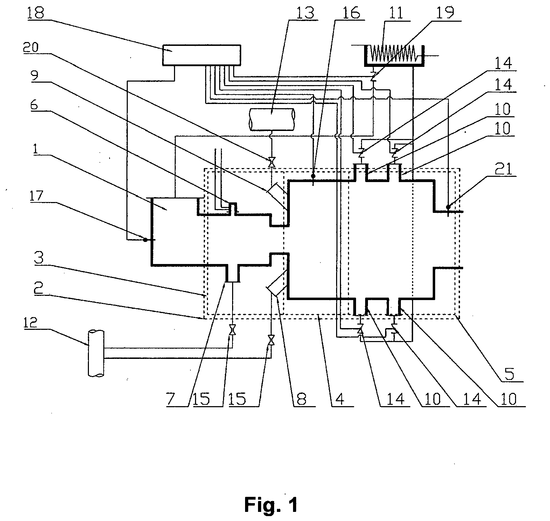

The synthesized gas combustion process is conducted on four dual-fuel burners. A schematic diagram of the combustion process is presented in Fig. 1.

In the first section 3 of the combustion system 2 air for the first combustion stage is fed through the air chamber 1. Natural gas is fed via the nozzles 7 perpendicularly to the air stream and tangentially to the walls of the first combustion section 3. The resulting mixture is ignited by means of an pilot burner 6. In order to deliver a natural gas stream to the combustion system 2 via nozzle 7, the pilot burner 6 must be operative. After activating pilot burner 6 it is recommended to wait a few minutes before introducing natural gas from the feeder 12. A few seconds after initiating the supply of natural gas to nozzles 7 flame control is performed by means of a flame detector 17 mounted on the back wall of the burner. If the flame detector 17 fails to confirm the presence of a flame when the system temperature is below 750°C, the supply of natural gas to the nozzles 7 is cut off. For natural gas to be delivered to the nozzles 7 at temperatures in the combustion system above 750°C, the pilot burner 6 must function properly or the flame detector 17 must confirm the presence of a flame. After exceeding the temperature of 750°C the role of the flame control is to measure the temperature on the walls of the combustion chamber, and at the same time the flame detectors located in the first combustion section and pilot burner are relieved of this role. This procedure results in an enhanced reliability of the system's performance. Because of the ceramic lining of the system's interior 2, the system must be heated gradually, in line with the relevant heating curve, and cooled down in accordance with the cooling curve. If the combustion system 2 starts operation when the temperature measured on the walls of the second combustion section 4 is lower than the nominal temperature, the system must be heated gradually in accordance with the heating curve, and operation at maximum output is not possible from the very start. When the temperature of the system exceeds 850°C measured by a temperature sensor 16 on the walls of the second combustion section 4 of the combustion system 2 the supply of natural gas to nozzles 7 and 8 is cut off and pilot burner 6 is turned off, and synthetic gas is delivered to the second combustion section 4 via nozzles 9. The amount of air delivered to the first and second sections 3 and 4 of the combustion system 2 approximates 70% of the stoichiometric value. Such amount of air allows to achieve a optimum, relatively low temperature in the second section 4 of the combustion system 2, required for the process of synthesized gas treatment. The generation of the said temperature allows to achieve an adequate quality of the combustion process and ensure low intensity of NOx production. In the third section 5 of the combustion system 2 the remaining portion of air is delivered, which allows to achieve the set excess air ratio at the system outlet. The air stream is supplied via nozzles 10 distributed on two levels on the walls of the combustion chamber and directed at an angle to the combustion chamber walls in order to enhance the inner vortex which guarantees intensification of the gas mixing process, longer residence time of gas in the chamber, afterburning of underburnt compounds from previous sections 3 and 4 of the combustion system 2 the aim of which is to maximise the quality of the combustion process.

The solution according to the invention does not require the use of mechanical parts, such as paddles or plates for swirling the stream and stabilising the flame. The use of such elements, in the presence of polluted and aggressive gasses, in conjunction with high temperature causes fast degradation and damage thereof, or in the best case, deposits accumulating on these parts cause rapid obstruction of burners, and consequently- failure and stoppage of the entire combustion system

The description presents one technical embodiment of the method and system for synthetic gas combustion, in the form of co-combustion of gas from the gasification of selected municipal waste and natural gas as a high caloric value fuel used for initial heating of the system, using the heat energy generated in the course of this process in the form of flue gases. Synthetic gas is generated in the process of gasification of selected municipal waste, biomass, coal and etc.. Owing to its composition, namely a high content of nitrogen compounds, such as NH₃, HCN, C₅H₅N, synthetic gas requires a special combustion process. The process involves volumetric, high-temperature combustion while maintaining precise control over the fuel/air and air/fuel ratios in specific combustion sections (air stratification), whilst minimising the consumption of natural gas as kindling/high calorific value fuel and in special cases as fuel for stabilizing the process. The installation has been prepared for use with synthetic gas which is characterised by the following parameters that change in real time: heat value, content of main gas components, including particulate matter and liquids containing high hydrocarbons, amount and type of pollutants, moisture content and pressure. The combustion of synthesized gas takes place in a non-cooled (semi-adiabatic) combustion chamber in the shape of a cylinder in the bottom part and a truncated cone in the upper part. The inclination of the combustion chamber walls in its upper part has a favourable effect on lowering the temperatures in this area, that is, in the second combustion section (making use of the radiation mechanism). The dimensions of the combustion chamber have been selected to meet the requirements of the minimum residence time of flue gas in the system, amounting to a few seconds, and the maximum flue gas flow rate in the combustion system, which is not more than a few meters per second. The minimum operating temperature of the combustion system has been determined at 850°C, this temperature ensures the combustion of low and mean calorific value gases. Temperature in the system exceeding 850°C is controlled by the amount of synthetic gas and air delivered. A drop in the system temperature below 850°C triggers the delivery of high calorific value gas directly to the second combustion section, when the temperature exceeds 850°C once again, the supply of high calorific value gas is cut off.

The combustion system is equipped with two-stage, dual fuel burners fed by independent media supplying systems, which ensures independent operation of individual burners. Depending on the measurements of flue gas temperature and oxygen concentration in flue gasses at the combustion system outlet, the amount of synthetic gas supplied is controlled, so as to maintain the set temperature and flue gas stream at the combustion system outlet. The amount of synthetic gas supplied to the combustion system is controlled by a control damper, which is shared by all four burners. The required synthetic gas pressure in the pipe feeding the combustion system is 10.0 kPa, nominal pressure 5.0 kPa, for a nominal rate of 750.0 Nm³/h per burner, which in the case of four installed burners totals 3000.0 Nm³/h, and a negative pressure in the combustion chamber reaching even 3 kPa. The air heated in the recuperator to a temperature of 800°C separates into two streams: the first stream feeds the first, and then indirectly the second and third combustion section and the second stream feeds directly the third combustion section. The first air stream for combustion is selected so that the excess air ratio in the second combustion stage achieves approximately 0.7. The required air pressure ensuring proper functioning of the burners ranges to 10 kPa, nominal pressure 5.0 kPa, and the flow rate for each burner approximates 850 Nm³/h, for the burner's nominal operating conditions. The second air stream is delivered directly to the combustion system, to the third combustion section, via 2 to 8 nozzles located on two levels of the lateral walls of the combustion chamber, where the first level of nozzles is inclined towards the flue gas outlet from the combustion chamber at 20° to the plane perpendicular to the longitudinal axis of the combustion chamber, compliant with the flue gas flow direction, which results in reduced flue gas recirculation from the third combustion section to the second combustion section and the creation of two zones in the combustion chamber with markedly different oxygen content, the second level of nozzles is positioned parallel to this plane, additionally the axles of nozzles distributed on both levels pass the longitudinal axis of the combustion chamber, thanks to which the exiting air forms a strong vortex inside the combustion chamber, whose rotation axis overlaps longitudinal axis of the combustion chamber, the flue gases and under-burnt fuel particles from the second stage combustion flow into this vortex where they are intensively mixed and the under-burnt particles are burnt completely. The required air pressure for the third combustion section to function properly is up to 10.0 kPa, nominal pressure 5 kPa, and the flow rate for this combustion section is 20,000.0 Nm³/h. Thanks to such a division of air streams and the inclined walls of the combustion chamber, we achieve a reduction atmosphere in the second combustion section and we reduce the process temperature in this area, this operation is essential for minimizing and reducing the production of NOx compounds. The second air stream supplied to the third combustion section increases the excess air ratio to 1.0 or even 5.0. The volume of air supplied to the third combustion section is controlled by control dampers valves according to the measurements performed. In the case of a smaller demand for air in the third combustion section or due to a lower power output of the system, air is delivered only to selected nozzles, which ensures maintaining relevant velocities within a wide scope of changes in the system's operation.

## Claims

1. A method of low-emission incineration of low and mean calorific value gases, particularly synthetic gases, in a combustion chamber of a combustion system (2) of industrial power equipment, wherein the incineration is carried out according to the following stages:
- supply of a continuous stream of air at a rate of 20 m/s and temperature of 0 to 800°C, preferably above 300°C,
- transporting of the air from a supply air chamber (1) to a first section (3) of the combustion system (2) where the air velocity increases to ca. 80 m/s and where it is mixed with high calorific value gas which is supplied at a rate of up to 25 m/s, preferably at 15 m/s, via at least one high calorific value gas nozzle (7),
- ignition of the resulting mixture using at least one pilot burner (6) which initiates and sustains the flame,
- heating subsequent second and third sections (4,5) of the combustion system (2) via the generated hot flue gases,
- feeding the second combustion section (4) after the temperature on its walls exceeds 750°C with high calorific value gas, preferably parallel to the stream of air with flue gases, via at least one high calorific value gas nozzle (8) while heating the combustion chamber with the resulting flame until the temperature measured on the walls in the second combustion section (4) reaches 850°C,
- feeding the second combustion section (4) via at least one nozzle (9) with low or mean calorific value gas at a rate of up to 120 m/s, preferably 70 m/s and at a temperature of 0 to 600°C, in an amount of up to 100% of the total stream to be incinerated,
- cutting off the high calorific value gas upon the initiation of supply of low and mean calorific value gas,
- restart of supply of high calorific value gas to the second combustion section (4) when the temperature at the system exit drops to below the set temperature and/or the temperature measured on the wall of the combustion chamber drops below the set temperature and further increase of low or mean calorific value gas stream is impossible or the calorific value of the gas is so low that increasing the gas stream causes further drop in temperature in the combustion chamber, wherein the amount of air supplied by the first combustion section (3) to the second combustion section (4) located in the combustion chamber is below the stoichiometric quantity, the excess air ratio ranging from 0.4 to 0.99, being preferably 0.7, a multi-level supply of air in the third combustion section (5) is located in the combustion chamber, preferably on two levels, having at least two air nozzles (10) per level, wherein the air nozzles (10) on each level are inclined towards the flow in the combustion chamber, where the inclination ranges between 0° to 45° from the plane perpendicular to the longitudinal axis of the combustion chamber and may differ for each level, additionally the air nozzles (10) on all levels are positioned in a way that causes within the combustion chamber a strong vortex with the rotation axis overlapping the axis of the combustion chamber, wherein air supplied airto the third combustion section (5) with a temperature of 0 to 800°C, preferably above 300°C, is introduced at a rate of up to 200 m/s, preferably 100 m/s, in an amount ensuring the creation of a zone with an elevated share of oxygen, the excess air ratio varying from 1.0 to up to 5.0.

2. The method according to claim 1, wherein in the second combustion section (4) a stream of low or mean calorific value gas is introduced into the combustion system (2) via said at least one nozzle (9) at an acute angle of 0- 90° to the longitudinal axis of the combustion chamber depending on the physicochemical properties of the gas.

3. A system for low-emission incineration of low or mean calorific value gases, particularly synthetic gases, comprising a combustion system (2) with a combustion chamber, a supply air chamber (1), a first section (3) of the combustion system (2) connected via a narrowing with a second section (4) of the combustion system (2) and in series with a third section (5) of the combustion system (2), at least one low or mean calorific value gas nozzle (9), high calorific value gas nozzles (7,8), at least one pilot burner (6), an air heater (11), a low or mean calorific value gas feeder (13), a high calorific value gas feeder (12), shut-off valves (15) for high calorific value gas, a control damper (19), at least two air nozzles (10), at least one temperature sensor (16), and a control element (18) connected to the shut-off valves (15) for high calorific value gas, to the control damper (19) and to the at least one temperature sensor (16), wherein the first section (3) of the combustion system has the form of a cylindrical cylinder which houses the at least one pilot burner (6) and at least one high calorific value gas nozzle (7) located parallel to the tangent of the cylindrical cylinder's cross-section, wherein at one side the first section (3) of the combustion system is connected to the supply air chamber (1) which is connected to the air heater (11) via the control damper (19) and at the other side it couples, through a narrowing, with the entrance of the second section (4) of the combustion system (2), wherein one cylinder contains the second (4) and third section (5) of the combustion system (2), wherein one part of the cylinder is the second section (4) of the combustion system (2) housing at least one high calorific value gas nozzle (8), the at least one low or mean calorific value gas nozzle (9), and the at least one temperature sensor (16) of the combustion system, wherein a second part of the cylinder is comprised of the third section (5) of the combustion system (2) housing the at least two air nozzles (10) and wherein in the first section (3) of the combustion system (2) the high calorific value gas nozzle (7) is connected to the high calorific value gas feeder (12) via a shut-off valve (15) while in the second section (4) of the combustion system (2) each high calorific value gas nozzle (8) is connected to a high calorific value gas feeder (12) via a shut-off valve (15).

4. The system according to claim 3, **wherein** in the second section (4) of the combustion system (2) each low or mean calorific value gas nozzle (9) is connected to the low or mean calorific value gas feeder (13) via a shut-off valve (20).

5. The system according to claim 3 or 4, **wherein** in the third section (5) of the combustion system (2) every air nozzle (10) is connected to the air heater (11) via a control damper (14),

6. The system as claimed in the preceding claim, further comprising a temperature sensor (21) at the exit of the third section (5) of the combustion system (2), **wherein** the control element (18) is connected to the temperature sensor (21), to the shut-off valve (20) of the low and mean calorific value gas nozzle (9), to the control dampers (14) of the air nozzles (10) supplying air to the third section (5) of the combustion system (2).

7. The system as claimed in the preceding claims 3 to 6, **wherein** said system has at least one branch where the first section (3) of the combustion system (2) is connected with the common second section (4) of the combustion system (2) and in series with the third combustion section (5) of the combustion system (2).

## Patentansprüche

1. Ein Verfahren zur emissionsarmen Verbrennung von kalorienarmen und mittelkalorischen Gasen, insbesondere Synthesegasen, in der Brennkammer des Verbrennungssystems (2) von Industriekraftanlagen, **dadurch gekennzeichnet, dass** die Verbrennung in den folgenden den Stufen erfolgt:
- Einführung eines kontinuierlichen Luftstroms mit einer Geschwindigkeit von 20 m/s bei einer Temperatur von 0 bis 800°C, vorzugsweise über 300°C,
- Lufttransport aus der Zuluftkammer (1) in das erste Segment (3) des Verbrennungssystems (2), wo die Luftgeschwindigkeit auf ca. 80 m/s ansteigt und wo die Luft mit einem hochkalorischen Gas gemischt wird, das mit einer Geschwindigkeit von bis zu 25 m/s, vorzugsweise 15 m/s, durch mindestens eine Düse des hohem Heizwert Gases (7) zugeführt wird,
- Zündung des entstehenden Gemisches mittels mindestens eines Zündbrenners (6), der die Flamme auslöst und aufrechterhält,
- sequentielles Erwärmung des zweiten und dritten Segmentes (4, 5) des Verbrennungssystems (2) mittels der erhaltenen heißen Verbrennungsabgase,
- Zufuhr des vollwertigen Gases zum zweiten Verbrennungssegment (4), nachdem die Temperatur an seinen Wänden 750°C übersteigt, vorzugsweise parallel zum Luftstrom mit Abgasen durch mindestens eine Düse des vollwertigen Gases (8), bei gleichzeitiger Beheizung der Brennkammer mit der erhaltenen Flamme, bis die an den Wänden im zweiten Verbrennungssegment (4) gemessene Temperatur 850°C erreicht,
- Zufuhr des kalorienarmen und mittelkalorischen Gases zum zweiten Verbrennungssegment (4) durch mindestens eine Düse (9) mit einer Geschwindigkeit von bis zu 120 m/s, vorzugsweise 70 m/s, mit einer Temperatur von 0 bis 600°C in einer Menge von bis zu 100% des zu verbrennenden Gesamtstroms,
- Absperren des vollwertigen Gases zu Beginn der Zuführung des kalorienarmen und mittelkalorischen Gases,
- erneute Zufuhr des vollwertigen Gases zum zweiten Verbrennungssegment (4), wenn die Temperatur am Ausgang des Systems die eingestellte Temperatur unterschreitet und/oder wenn die an der Brennkammerwand gemessene Temperatur die eingestellte Temperatur unterschreitet und eine weitere Erhöhung des Stroms von kalorienarmen und mittelkalorischen Gasen nicht möglich ist, oder wenn der Heizwert dieses Gases so niedrig ist, dass eine Erhöhung des Gasstroms einen weiteren Temperaturabfall in der Brennkammer zur Folge hat und die Luftmenge, die vom ersten Verbrennungssegment (3) zum zweiten Verbrennungssegment (4) in der Brennkammer geliefert wird, die stöchiometrischen Menge unterschreitet, der Wert des Luftüberschusskoeffizienten beträgt üblicherweise 0,4 bis 0,99, vorzugsweise 0,7,
- mehrstufige Luftzufuhr zum zweiten Verbrennungssegment (5) in der Verbrennungskammer, vorzugsweise auf zwei Ebenen, die mit mindestens zwei Luftdüsen (10) je ausgestattet sind, wo die Luftdüsen (10) auf jeder Ebene in der Strömungsrichtung in der Brennkammer geneigt sind, und diese Neigung im Bereich von 0° bis 45° von der zur Längsachse der Brennkammer senkrechten Ebene liegt, und für jede Ebene unterschiedlich sein kann, außerdem sind die Luftdüsen (10) in allen Ebenen so eingestellt, dass ein starker Wirbel in der Brennkammer erzeugt wird, wobei die Drehachse mit der Brennkammerachse zusammenfällt, und wo die Luft, die dem dritten Verbrennungssegment (5) mit einer Temperatur von 0 bis 800°C, vorzugsweise über 300°C, geliefert wird, mit einer Geschwindigkeit von bis zu 200 m/s, vorzugsweise 100 m/s, in einer Menge zugeführt wird, die die Bildung einer Zone mit einem hohen Sauerstoffanteil ermöglicht, und der Wert des Luftüberschusskoeffizienten im Bereich von 1,0 bis sogar 5,0 liegt.

2. Das Verbrennungsverfahren nach Anspruch 1, **dadurch gekennzeichnet, dass** im zweiten Verbrennungssegment (4) der Strom von kalorienarmen und mittelkalorischen Gasen in das Verbrennungssystem (2) durch mindestens eine erwähnte Düse (9) eingeleitet wird, die in einem spitzen Winkel von 0 bis 90° zur Längsachse des Verbrennungssystems eingestellt ist, in Abhängigkeit von den physikalischchemischen Eigenschaften des Gases.

3. Ein System zur emissionsarmen Verbrennung von kalorienarmen und mittelkalorischen Gasen, insbesondere Synthesegasen, bestehend aus: Verbrennungssystem (2) mit Brennkammer, Luftzufuhrkammer (1), dem ersten Segment (3) des Verbrennungssystems (2), dass über eine Verengung mit dem zweiten Segment (4) des Verbrennungssystem (2) und mit dem dritten Segment (5) des Verbrennungssystems (2) in Reihe verbunden, mindestens einer Düse des kalorienarmen und mittelkalorischen Gases (9), Düsen des vollwertiges Gases (7, 8), mindestens einem Zündbrenner (6), Luftvorwärmer (11), Versorgung Gaszuführung des kalorienarmen und mittelkalorischen Gases (13), Versorgung des vollwertigen Gases (12), Absperrventile (15) für vollwertiges Gas, Regulierklappe (19), mindestens zwei Luftdüsen (10), mindestens einem Temperatursensor (16) und einem Steuerelement (18), das mit den Absperrventilen (15) für vollwertiges Gas, mit der Regulierklappe (19) und mindestens einem Temperatursensor (16) verbunden ist, **dadurch gekennzeichnet, dass** das erste Segment (3) des Verbrennungssystems als walzenförmiger Zylinder ausgebildet ist, in dem sich mindestens ein Zündbrenner (6) und mindestens eine Düse des vollwertigen Gases (7) befinden, die in einer Achse parallel zum tangentialen Querschnitt des walzenförmigen Zylinders angeordnet ist, wo auf der einen Seite das erste Segment (3) des Verbrennungssystems mit der Zuluftkammer (1) verbunden ist, die über eine Regulierklappe (19) mit dem Luftvorwärmer (11) verbunden ist, und auf der anderen Seite durch eine Verengung mit dem Eingang zum zweiten Segment (4) des Verbrennungssystems (2) verbunden ist, wo sich in einem Zylinder ein zweites (4) und ein drittes Segment (5) des Verbrennungssystems (2) befinden, wobei ein Teil des Zylinders das zweite Segment (4) des Verbrennungssystems (2) ist, wo sich: mindestens eine Düse des vollwertigen Gases (8), mindestens eine Düse der kalorienarmen und mittelkalorischen Gase (9) und mindestens ein Temperatursensor (16) des Verbrennungssystems befinden, der andere Teil des Zylinders umfasst hingegen das dritte Segment (5) des Verbrennungssystems (2), das mindestens zwei Luftdüsen (10) umfasst und wo im ersten Segment (3) des Verbrennungssystems (2) die Düse des vollwertigen Gases (7) über ein Absperrventil (15) mit der Versorgung des vollwertiges Gases (12) verbunden ist, während im zweiten Segment (4) des Verbrennungssystems (2) jede Düse des vollwertigen Gases (8) über ein Absperrventil (15) mit der Versorgung des vollwertiges Gases (12) verbunden ist.

4. Das System nach Anspruch 3, **dadurch gekennzeichnet, dass** im zweiten Segment (4) des Verbrennungssystems (2) jede Düse der kalorienarmen und mittelkalorischen Gase (9) über ein Absperrventil (20) mit der Versorgung der kalorienarmen und mittelkalorischen Gase (13) verbunden ist.

5. Das System nach Anspruch 3 oder 4, **dadurch gekennzeichnet, dass** im dritten Segment (5) des Verbrennungssystems (2) jede Luftdüse (10) über eine Regulierklappe (14) mit dem Luftvorwärmer (11) verbunden ist.

6. Das System nach dem früheren Anspruch, der weiter ein Temperatursensor (21) am Ausgang aus dem dritten Verbrennungssegment (5) umfasst, **dadurch gekennzeichnet, dass** das Steuerelement (18) mit dem Temperatursensor (21), mit dem Absperrventil (20) des kalorienarmen und mittelkalorischen Gases (9) und mit den Regulierklappen (14) der Luftdüsen (10) verbunden ist, die die Luft dem dritten Segment (5) des Verbrennungssystems (2) zuführen.

7. Das System nach den früheren Ansprüchen von 3 bis 6, **dadurch gekennzeichnet, dass** das genannte System mindestens eine Abzweigung hat, wo das erste Segment (3) des Verbrennungssystems (2) mit dem gemeinsamen zweiten Segment (4) des Verbrennungssystems (2) und mit dem dritten Verbrennungssegment (5) des Verbrennungssystems (2) in Reihe verbunden ist.

## Revendications

1. Un procédé de combustion à faible émission des gaz à bas ou moyen pouvoir calorifique, en particulier des gaz de synthèse, dans une chambre de combustion du système de combustion (2) des équipements électriques industriels, **caractérisée en ce que** la combustion est effectuée selon les étapes suivantes:
- alimenter en air par un courant d'air constant à une vitesse de 20 m / s et à une température de 0 à 800° C, de préférence supérieure à 300° C,
- transporter de l'air d'une chambre d'alimentation en air (1) vers la première section (3) du système de combustion (2) où la vitesse de l'air augmente jusqu'à environ 80 m / s et où il est mélangé avec un gaz à haut pouvoir calorifique qui est fourni à une vitesse maximale de 25 m / s, de préférence de 15 m / s, par au moins une buse à gaz à haut pouvoir calorifique (7),
- allumer le mélange obtenu à l'aide d'au moins un brûleur d'allumage (6) qui allume et entretient la flamme,
- chauffer consécutivement les deuxième et troisième sections (4, 5) du système de combustion (2) par le biais des gaz de combustion chauds générés,
- alimenter la deuxième section de combustion (4) en gaz à haut pouvoir calorifique après que la température sur ses parois dépasse 750°C, de préférence parallèlement au flux d'air contenant les gaz de combustion par le biais d'au moins une buse de gaz à haut pouvoir calorifique (8) tout en chauffant la chambre de combustion avec la flamme résultante jusqu'à ce que la température mesurée sur les parois de la deuxième section de combustion (4) atteigne 850° C,
- alimenter la deuxième section de combustion (4) en gaz à bas ou moyen pouvoir calorifique par le biais d'au moins une buse (9) à un débit allant jusqu'à 120 m / s, de préférence 70 m / s et à une température de 0 à 600° C, en quantité allant jusqu'à 100% du flux total à incinérer,
- couper le gaz à haut pouvoir calorifique au moment où le gaz à bas ou moyen pouvoir calorifique commence à être fourni,
- reprendre l'alimentation en gaz de haut pouvoir calorifique de la deuxième section de combustion (4) lorsque la température à la sortie du système tombe en dessous de la température définie et / ou lorsque la température mesurée sur la paroi de la chambre de combustion tombe en dessous de la température définie et la continuation de l'augmentation du flux de gaz à moyen ou bas pouvoir calorifique est impossible ou le pouvoir calorifique du gaz est si bas que l'augmentation du flux de gaz provoque une nouvelle baisse de température dans la chambre de combustion, et la quantité d'air fournie par la première section de combustion (3) à la deuxième section de combustion (4) située dans la chambre de combustion est inférieure à la quantité stoechiométrique, le rapport du volume d'excès d'air s'élève d'habitude de 0,4 à 0,99, de préférence égal à 0,7,
- alimenter en air à niveaux multiples la troisième section de combustion (5) située dans la chambre de combustion, de préférence sur deux niveaux équipés d'au moins deux buses à injection d'air (10) chacun, où les buses d'air (10) étant situées à chaque niveau sont inclinées dans le sens du flux dans la chambre de combustion, où l'inclinaison est comprise entre 0° et 45° du plan perpendiculaire à l'axe longitudinal de la chambre de combustion et peut différer pour chaque niveau, de plus, les buses à injection d'air (10) sont positionnées dans tous les niveaux d'une manière qui, dans la chambre de combustion, provoque un tourbillon puissant dont l'axe de rotation chevauche celui de la chambre de combustion, dans laquelle de l'air introduit dans la troisième section de combustion (5) à une température de 0 à 800° C, de préférence supérieure à 300° C, est diffusé jusqu'à 200 m / s, de préférence 100 m / s, en quantité suffisante pour créer une zone contenant une proportion élevée d'oxygène, le rapport du volume d'excès d'air variant de 1,0 à 5,0.

2. Un procédé selon la revendication 1, **caractérisée en ce que** dans la deuxième section de combustion (4), un courant de gaz à bas ou moyen pouvoir calorifique est introduit dans le système de combustion (2) par ladite au moins une buse (9) fixée à un angle aigu de 0 à 90° par rapport à l'axe longitudinal de la chambre de combustion en fonction des propriétés physico-chimiques du gaz.

3. Le système de combustion à faible émission des gaz à bas ou moyen pouvoir calorifique, en particulier des gaz de synthèse, comprenant : un système de combustion (2) avec une chambre de combustion, une chambre d'alimentation en air (1), une première section (3) du système de combustion (2) reliée par un rétrécissement à une deuxième section (4) du système de combustion (2) et en série avec une troisième section (5) du système de combustion (2), au moins une buse à injection de gaz à bas ou moyen pouvoir calorifique (9), des buses de gaz à haut pouvoir calorifique (7, 8), au moins un brûleur d'allumage (6), un réchauffeur d'air (11), un dispositif d'alimentation en gaz à bas ou moyen pouvoir calorifique (13), un dispositif d'alimentation en gaz à haut pouvoir calorifique (12), des vannes d'arrêt (15) pour le gaz à haut pouvoir calorifique, un régulateur de gaz (19), au moins deux buses d'air (10), au moins un capteur de température (16) et un élément de contrôle (18) relié à des vannes d'arrêt (15) pour le gaz à haut pouvoir calorifique, au régulateur de gaz (19) et à au moins un capteur de température (16), **caractérisée en ce que** la première section (3) du système de combustion a la forme d'un cylindre cylindrique dans lequel est placé au moins un brûleur d'allumage (6) et au moins une buse de gaz à haut pouvoir calorifique (7) situé à l'axe parallèle à la tangente de la section transversale du cylindre cylindrique, où d'un côté la première section (3) du système de combustion est reliée à la chambre d'alimentation en air (1) qui est reliée à un réchauffeur d'air (11) par le biais d'un régulateur (19) et de l'autre côté, elle est reliée - par un rétrécissement - à l'entrée de la deuxième section (4) du système de combustion (2), dans lequel un cylindre contient les deuxième (4) et troisième sections (5) du système de combustion (2), où une partie du cylindre constitue la deuxième section (4) du système de combustion (2) comprenant au moins une buse de gaz à haut pouvoir calorifique (8), au moins une buse de gaz à bas ou moyen pouvoir calorifique (9) et au moins un capteur de température (16) du système de combustion, par contre, la deuxième partie du cylindre comprend la troisième section (5) du système de combustion (2) comprenant au moins deux buses d'air (10) et où, dans la première section (3) du système de combustion (2), la buse de gaz à haut pouvoir calorifique (7) est raccordée au dispositif d'alimentation en gaz à haut pouvoir calorifique (12) par le biais d'une vanne d'arrêt (15) tandis que dans la deuxième section (4) du système de combustion (2), chaque buse de gaz à haut pouvoir calorifique (8) est reliée à un distributeur de gaz à haut pouvoir calorifique (12) par le biais d'une vanne d'arrêt (15).

4. Le système selon la revendication 3, **caractérisé en ce que** dans la seconde section (4) du système de combustion (2), chaque buse de gaz à bas et moyen pouvoir calorifique (9) est reliée au dispositif d'alimentation en gaz à bas et moyen pouvoir calorifique (13) par une vanne d'arrêt (20).

5. Le système selon la revendication 3 ou 4, **caractérisé en ce que** dans la troisième section (5) du système de combustion (2), chaque buse d'air (10) est reliée à un réchauffeur d'air (11) par le biais d'une vanne de régulation (14).

6. Le système selon la revendication précédente, comprenant ce qui suit : un capteur de température (21) à la sortie de la troisième section de combustion (5), **caractérisé en ce que** l'élément de contrôle (18) est relié à un capteur de température (21), à une vanne d'arrêt (20) de la buse de gaz à bas et moyen pouvoir calorifique (9) et à des vannes de régulation (14) des buses d'air (10) alimentant en air la troisième section (5) du système de combustion (2).

7. Le système selon les revendications 3 à 6 précédentes, **caractérisé en ce que** ledit système comporte au moins une branche où la première section (3) du système de combustion (2) est reliée à la deuxième section commune (4) du système de combustion (2) et en série à la troisième section de combustion (5) du système de combustion (2).
